# EUROPEAN PATENT SPECIFICATION

(11) **EP 2 924 941 B1**
(45) Date of publication and mention of the grant of the patent: **11.09.2019**
(21) Application number: 12890977.7
(22) Date of filing: 26.12.2012
(51) Int. Cl.: H04L 29/06, H04L 29/12, H04L 29/08

(54) **METHOD AND DEVICE FOR PREVENTING SERVICE ILLEGAL ACCESS**
VERFAHREN UND VORRICHTUNG ZUR VORBEUGUNG VON ILLEGALEM DIENSTZUGRIFF
PROCÉDÉ ET DISPOSITIF DE PRÉVENTION D'UN ACCÈS ILLÉGAL À UN SERVICE

(43) Date of publication of application: 30.09.2015
(73) Proprietor: Huawei Technologies Co., Ltd., Longgang District Shenzhen, Guangdong 518129 (CN)
(72) Inventor: GUO, Jiancheng, Shenzhen Guangdong 518129 (CN); HU, Yusheng, Shenzhen Guangdong 518129 (CN)
(74) Representative: Goddar, Heinz J.
(86) International application number: PCT/CN2012/087581
(87) International publication number: WO 2014/101023

(56) References cited:
- WO-A2-2006/090392
- CN-A- 101 212 387
- CN-A- 101 272 407
- CN-A- 102 801 716
- US-A1- 2007 168 552
- US-A1- 2008 222 730

## Description

### TECHNICAL FIELD

The present invention relates to the network access control field, and in particular, to a method and apparatus for preventing unauthorized service access.

### BACKGROUND

Popularity of mobile communication and development of IP networks have driven the growth of network data access by a mobile station (Mobile Station, MS for short) such as a mobile phone, accesses network data by way of a uniform resource locator (Uniform Resource Locator, URL for short). When a mobile station accesses service data, it is necessary to distinguish between different domain names, so as to offer differentiated charging management for chargeable websites and free websites.

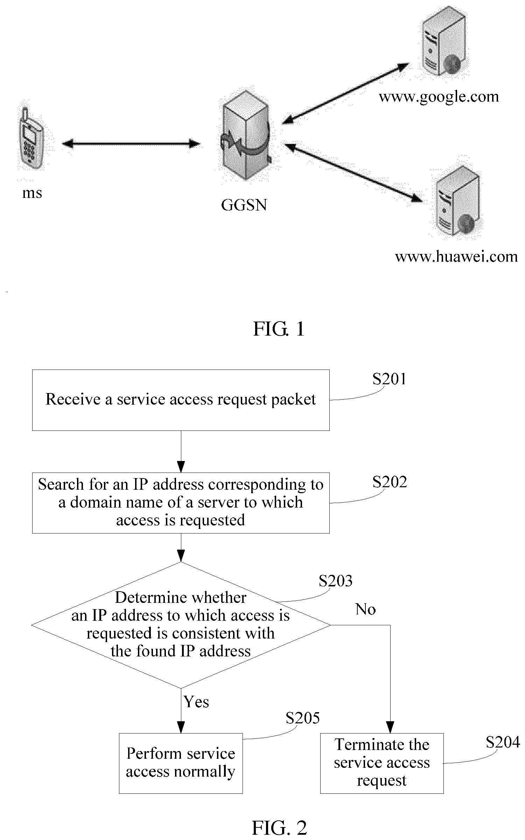

FIG. 1 is a schematic diagram of charging architecture in the prior art. A mobile station MS accesses content on a Hypertext Transfer Protocol (Hypertext transfer protocol, HTTP for short) server through a gateway device, a gateway GPRS serving support node (Gateway GPRS Support Node, GGSN for short), and different charging policies for different URLs are configured on the gateway device GGSN, for example, configuring a policy stating that all websites with the domain name www.google.com should be charged and all websites with the domain name www.huawei.com can be visited free of charge.

However, when the GGSN sends packets to HTTP servers, most HTTP servers do not check domain name fields in the packets. For example, after a Sina server receives a URL request similar to www.sina.com\news, the Sina server does not determine whether the domain name is correct, but returns a corresponding page according to a path part that follows the domain name. Therefore, for a Sina HTTP server, www.sina.com\news and www.abc.com\news are the same and both redirect a peer end to a page corresponding to news. Therefore, if a user tampers with a packet sent to a gateway device by changing a domain name that is actually to be accessed, such as www.google.com, to a free domain name such as www.huawei.com, the gateway device resolves a tampered packet and finds that the URL matches a service free policy, and consequently, the gateway device cannot perform effective charging for the packet and a user can illegally access a chargeable service for free.

WO 2006/090392 A2 discloses a method for detecting attacks such as DNS spoofing attacks. The method comprises receiving notification of an IP request, the IP request being associated with a request IP address and a desired hostname, and detecting whether the requested IP address matches the desired hostname.

### SUMMARY

An objective of embodiments of the present invention is to provide a method and apparatus for preventing unauthorized service access, so as to solve a problem in the prior art where a gateway device cannot charge for a chargeable service due to tampering of a domain name in a packet by a user, thereby effectively preventing unauthorized access to a service by a user.

According to a first aspect of the present invention, a method for preventing unauthorized service access is provided, where the method includes: receiving, by a gateway device, a service access request packet sent by a mobile station, where the packet includes a domain name of a server to which access is requested and an IP address of the server to which access is requested; searching, according to a preset table of correspondences between service types and IP addresses, for a service type corresponding to the IP address of the server to which access is requested; searching, by the gateway device, according to a preset table of correspondences between domain names of servers and IP addresses on the gateway device, for an IP address corresponding to the domain name of the server to which access is requested; determining, by the gateway device, whether the IP address of the server to which access is requested is consistent with the found IP address; and terminating, by the gateway device, the service access request if the IP address of the server to which access is requested is inconsistent with the found IP address.

In a second possible implementation of the first aspect, the step of searching for an IP address corresponding to the domain name of the server to which access is requested specifically includes: searching, according to a preset table of correspondences between domain names of servers and IP addresses, for the IP address corresponding to the domain name of the server to which access is requested.

With reference to the second possible implementation of the first aspect, in a third possible implementation, before the step of searching for a service type corresponding to the IP address of the server to which access is requested, the method further includes: receiving and storing a table of correspondences between service types and IP addresses.

With reference to the second possible implementation of the first aspect, in a fourth possible implementation, after the step of receiving a service access request packet, the method further includes: searching, according to a preset table of correspondences between service types and IP addresses, for a service type corresponding to the IP address of the server to which access is requested.

In a fifth possible implementation of the first aspect, the step of terminating the service access request specifically includes: discarding the service access request packet.

According to a second aspect of the present invention, an apparatus for preventing unauthorized service access is provided, where the apparatus is a gateway device, and includes a receiving module, a service type searching module, an IP address searching module, a first determining module, and a first service access request terminating module, where: the receiving module is configured to receive a service access request packet, the service type searching module is configured to search, according to a preset table of correspondences between service types and IP addresses, for a service type corresponding to the IP address of the server to which access is requested; where the packet includes a domain name of a server to which access is requested and an IP address of the server to which access is requested; the IP address searching module is configured to search according to a preset table of correspondences between domain names of servers and IP addresses on the gateway device, for an IP address corresponding to the domain name of the server to which access is requested; the first determining module is configured to determine whether the IP address of the server to which access is requested is consistent with the found IP address; the first service access quest terminating module is configured to terminate the service access request if the IP address of the server to which access is requested is inconsistent with the found IP address.

With reference to the first possible implementation of the second aspect, in a second possible implementation, the apparatus further includes a receiving and storing module, configured to receive and store a table of correspondences between service types and IP addresses.

In a third possible implementation of the second aspect, the apparatus further includes: a service type searching module, configured to search, according to a preset table of correspondences between service types and IP addresses, for a service type corresponding to the IP address of the server to which access is requested.

In a fourth possible implementation of the second aspect, the first service request terminating module or the second service request terminating module is specifically configured to discard the service access request packet.

In the embodiments of the present invention, after a service access request packet is received, an IP address corresponding to a domain name of a server which is included in the request packet is searched for and the found IP address is compared with the IP address in the packet. If a user tampers with
domain name information in the packet, the found IP address is an IP address corresponding to the changed domain name and is inconsistent with the IP address, which is included in the packet, of the server to which access is requested. In this way, it is determined that the service access is unauthorized and the service access request is terminated. This effectively solves a problem in which a gateway device cannot charge for a chargeable service due to tampering of a domain name in a packet by a user.

### BRIEF DESCRIPTION OF DRAWINGS

FIG. 1 is a schematic diagram of charging architecture in the prior art of the present invention;
FIG. 2 is a flowchart illustrating implementation of a method for preventing unauthorized service access according to Embodiment 1 of the present invention;
FIG. 3 is a schematic flow diagram of preventing unauthorized service access according to Embodiment 2 of the present invention;
FIG. 4 is a schematic flow diagram of preventing unauthorized service access according to Embodiment 3 of the present invention;
FIG. 5 is a schematic flow diagram of preventing unauthorized service access according to Embodiment 4 of the present invention;
FIG. 6 is a schematic structural diagram of a system for preventing unauthorized service access according to Embodiment 5 of the present invention;
FIG. 7 is a structural block diagram of an apparatus for preventing unauthorized service access according to Embodiment 6 of the present invention;
FIG. 8 is a structural block diagram of an apparatus for preventing unauthorized service access according to Embodiment 7 of the present invention; and
FIG. 9 is a schematic structural diagram of a system according to embodiments of the present invention.

### DESCRIPTION OF EMBODIMENTS

To make the objectives, technical solutions, and advantages of the embodiments of the present invention clearer, the following further describes the technical solutions in the embodiments of the present invention in detail with reference to the accompanying drawings and the embodiments. It should be understood that the described specific embodiments are merely intended for describing the present invention rather than limiting the present invention.

In the embodiments of the present invention, a service access request packet is received, where the packet includes a domain name of a server to which access is requested and an IP address of the server to which access is requested, and the IP address is obtained through resolution that is performed by a domain name server according to the domain name in the initiated request when an access request is initiated by a client; and then, an IP address corresponding to the domain name of the server in the request packet is searched for and the found IP address is compared with the IP address in the packet. If a user tampers with domain name information in the packet, the found IP address is an IP address corresponding to the changed domain name and is inconsistent with the IP address, which is included in the packet, of the server to which access is requested. In this way, it is determined that the service access is unauthorized and the service access request is terminated. This effectively solves a problem in which a gateway device cannot charge for a chargeable service due to tampering of a domain name in a packet by a user.

### Embodiment 1

FIG. 2 illustrates an implementation process of preventing unauthorized service access according to Embodiment 1 of the present invention. The details are described as follows:
In step S201, receive a service access request packet, where the packet includes a domain name of a server to which access is requested and an IP address of the server to which access is requested.

Specifically, the received service access request packet may be an access request sent by a mobile station, a device such as a mobile phone and a mobile computer. The device that receives the request may be a deep packet inspection DPI device such as a GGSN. The domain name of the server to which access is requested and the IP address of the server to which access is requested in the packet refer to an IP address corresponding to a domain name that is obtained by resolving by a domain name server according to a link to a request, a domain name address in the link to the request when a mobile station device sends the access request. The IP address that is resolved from the domain name in the access request is the IP address, which is described herein, of the server to which access is requested.

In step S202, search for an IP address corresponding to the domain name of the server to which access is requested.

Before searching for an IP address corresponding to the domain name of the server to which access is requested, a table of correspondences between domain names of servers and IP addresses may be preset on a gateway device, or a system may send in advance a request for resolving the domain name of the server to which access is requested in the packet so that the domain name server resolves the domain name to obtain the corresponding IP address.

In the preset table of correspondences between domain names of servers and IP addresses, some common domain names of servers corresponding to fixed IP addresses may be stored in advance, or correspondences between domain names of servers and IP addresses may be dynamically stored each time the system performs domain name resolution. Apparently, an IP address returned by the system when the system performs domain name resolution on a server domain name included in each packet is more up-to-date than those IP addresses stored in advance, and therefore the dynamic storing is suitable for a server whose IP address changes.

In step S203, determine whether the IP address of the server to which access is requested is consistent with the found IP address.

Compare the IP address found in step S202 with the IP address, which is included in the packet, of the server to which access is requested, to determine whether the two IP addresses are identical.

In step S204, terminate the service access request if the IP address of the server to which access is requested is inconsistent with the found IP address.

Specifically, if the IP address of the server to which access is requested and that is included in the packet is different from the IP address found in step S202, it indicates that the domain name of the packet has been tampered with when the packet is uploaded, and the access request of the packet is an unauthorized request. Then, the system rejects the request and terminates the service access request.

If the IP address of the server to which access is requested is consistent with the found IP address, perform step S205 to continue normal service access.

According to this embodiment of the present invention, domain name resolution is performed on a domain name, which is in a packet, of a server to which access is requested to obtain an IP address corresponding to the domain name of the server in the packet, and the obtained IP address is compared with an IP address in the packet. If the IP addresses are inconsistent, it indicates that the current packet has been tampered with. Then, access to relevant service data is prevented.

### Embodiment 2

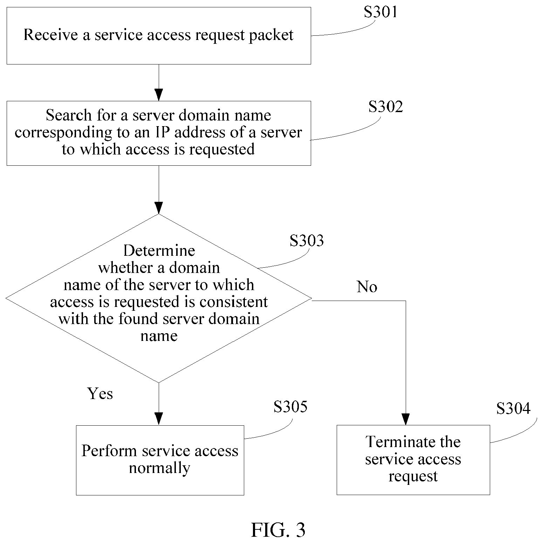

FIG. 3 is a schematic flow diagram of preventing unauthorized service access according to Embodiment 2 of the present invention. The details are described as follows:
In step S301, receive a service access request packet, where the packet includes a domain name of a server to which access is requested and an IP address of the server to which access is requested.
In step S302, search, according to a preset table of correspondences between domain names of servers and IP addresses, for a server domain name corresponding to the IP address of the server to which access is requested.

Different from Embodiment 1, a corresponding domain name is searched for according to the IP address in the packet. This search may be performed by using a table of correspondences between IP addresses and domain names of servers which is stored in the system, or may be performed by accessing the IP address in the packet to connect to a server corresponding to the IP address and then obtaining domain name information of the server. Details are not described herein again.

In step S303, determine whether the domain name of the server to which access is requested is consistent with the found server domain name.

Correspondingly, compare the server domain name that is found according to the IP address in the packet with the domain name of the server in the packet. If the domain names are consistent, it indicates that the current packet is not tampered with.

In step S304, terminate the service access request if the domain name of the server to which access is requested is inconsistent with the found server domain name.

If the domain name of the server to which access is requested is inconsistent with the found server domain name, the uploaded packet is probably tampered with by a user. Then, the system sends an access termination request to prevent this unauthorized access, and discards the packet.

If the domain name of the server to which access is requested is consistent with the found server domain name, perform step S305 to continue normal service access.

A difference between this embodiment and Embodiment 1 lies in a query manner. In Embodiment 1, an IP address is searched for according to a domain name of a server in a packet to perform comparison of IP addresses. In this embodiment, a domain name of a server is searched for according to an IP address in a packet to perform comparison of domain names of servers.

### Embodiment 3

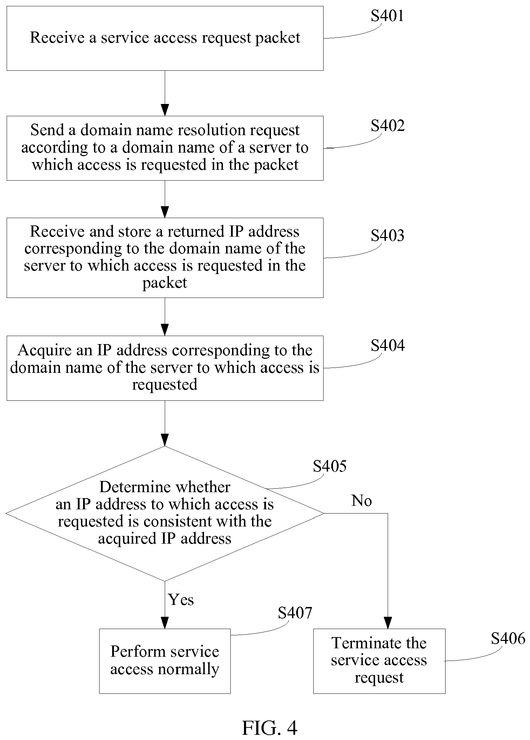

FIG. 4 is a schematic flow diagram of preventing unauthorized service access according to Embodiment 3 of the present invention. The details are described as follows:
In step S401, receive a service access request packet, where the packet includes a domain name of a server to which access is requested and an IP address of the server to which access is requested.
In step S402, send a domain name resolution request according to the domain name of the server to which access is requested in the packet.
In step S403, receive and store an IP address that is returned after domain name resolution and is corresponding to the domain name of the server to which access is requested in the packet.

Specifically, the domain name of the server in the packet is resolved, and there is a very short time between returning the IP address and resolving the domain name at sending of the service access request. Therefore, in this period of time, the probability of an IP address change is very low, and it may avoid, as much as possible, inadvertent packet loss that occurs when two consecutive comparisons of IP addresses are inconsistent due to a change of the IP address of the server.

In step S405, determine whether the IP address of the server to which access is requested in the packet is consistent with the returned IP address.

In step S406, terminate the service access request if the IP address of the server to which access is requested in the packet is inconsistent with the returned IP address.

If the IP address of the server to which access is requested is consistent with the returned IP address, perform step S407 to continue normal service access.

Steps S401 and S404-S406 in this embodiment of the present invention are sufficiently similar to steps S101-S104 in Embodiment 1. Details are not described herein again. A difference lies in that the corresponding IP address that is obtained by resolving the domain name of the server in the packet by the system is more up-to-date and a lower erroneous determination rate.

### Embodiment 4

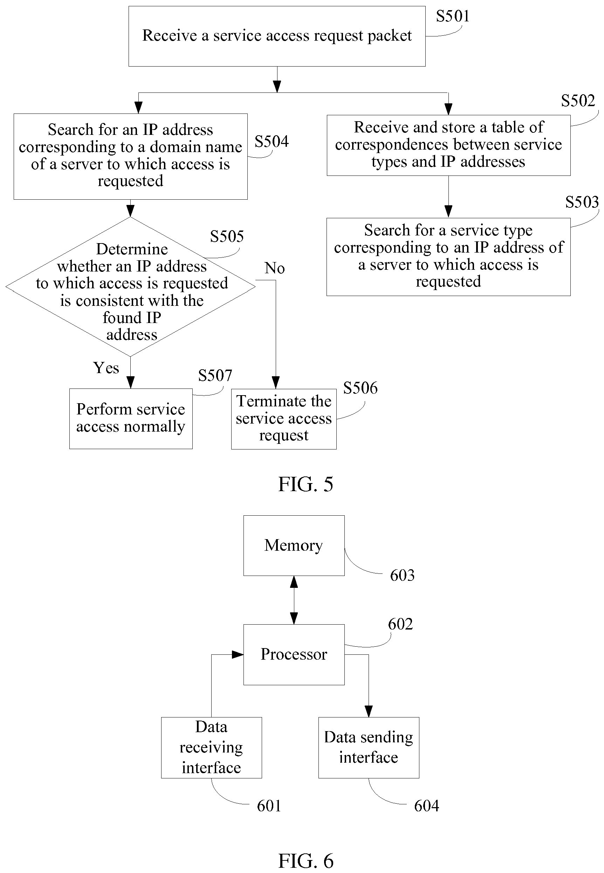

FIG. 5 is a schematic flow diagram of preventing unauthorized service access according to Embodiment 4 of the present invention. The details are described as follows:
In step S501, receive a service access request packet, where the packet includes a domain name of a server to which access is requested and an IP address of the server to which access is requested.
In step S502, receive and store a table of correspondences between the service types and IP addresses.
In step S503, search, according to the stored table of correspondences between service types and IP addresses, for a service type corresponding to the IP address of the server to which access is requested.

Specifically, because in the prior art, some encrypted applications , such as Gmail, the service type may not be obtained by resolving a feature like a URL, or such as P2P service Xunlei, data sent by such applications has no obvious features, can be matched with the IP addresses of domain names of servers. Storing matching information between the servers of some common applications and IP addresses, so that a service type may be determined conveniently according to the stored matching information and the IP address in the packet during determination of the service type.

In step S504, search, according to a preset table of correspondences between domain names of servers and IP addresses, for an IP address corresponding to the domain name of the server to which access is requested.

In step S505, determine whether the IP address of the server to which access is requested is consistent with the found IP address.

In step S506, terminate the service access request if the IP address of the server to which access is requested is inconsistent with the found IP address.

If the IP address of the server to which access is requested is consistent with the found IP address, perform step S507 to continue normal service access.

In this embodiment of the present invention, by using a stored table of correspondences between IP addresses and service types, a type of service access may be determined immediately after resolving an IP address from an uploaded packet. Compared with a traditional deep packet inspection DPI technology, the solutions in this embodiment of the present invention are relatively simple and convenient. In addition, for some encrypted applications such as Gmail and some data streams without obvious features, when a service type may not be determined by using the deep packet inspection DPI technology, this embodiment of the present invention may be used to effectively determine the service type.

### Embodiment 5

FIG. 6 is a schematic structural diagram of a system for preventing unauthorized service access according to Embodiment 5 of the present invention. The details are described as follows:

The system for preventing unauthorized service access described in this embodiment of the present invention includes a data receiving interface 601, a processor 602, a memory 603 and a data sending interface 604, where:
the data receiving interface 601 is configured to receive a service access request packet, where the packet includes a domain name of a server to which access is requested and an IP address of the server to which access is requested;
the processor 602 is configured to search for an IP address corresponding to the domain name of the server to which access is requested, and then determine whether the IP address of the server to which access is requested is consistent with the found IP address; and if the IP address of the server to which access is requested is inconsistent with the found IP address, terminate the service access request; or
search for a server domain name corresponding to the IP address of the server to which access is requested; then determine whether the domain name of the server to which access is requested is consistent with the found server domain name; and if the domain name of the server to which access is requested is inconsistent with the found server domain name, terminate the service access request.

As a possible implementation of this embodiment of the present invention, the apparatus described in this embodiment of the present invention further includes the memory 603, configured to store a table of correspondences between domain names of servers and IP addresses or a table of correspondences between service types and IP addresses. By directly reading the correspondences stored in the memory, the processor may search for an IP address corresponding to the domain name of the server to which access is requested or a server domain name corresponding to the IP address of the server to which access is requested.

This embodiment of the present invention further includes the data sending interface 604, configured to send the service access packet to request data access, by the data sending interface if the IP address of the server to which access is requested is consistent with the found IP address or the domain name of the server to which access is requested is consistent with the found server domain name.

### Embodiment 6

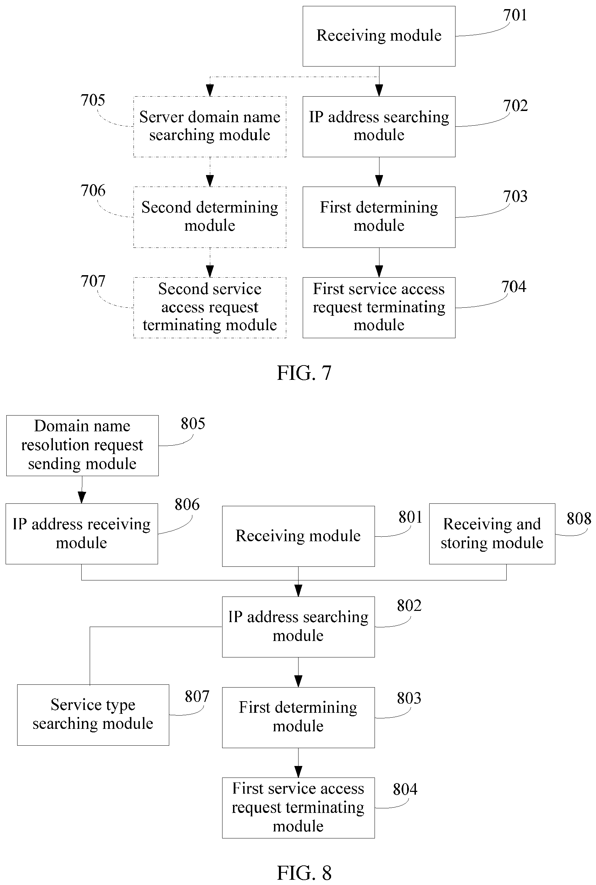

FIG. 7 is a structural block diagram of an apparatus for preventing unauthorized service access according to Embodiment 6 of the present invention. The details are described as follows:

The apparatus for preventing unauthorized service access described in this embodiment of the present invention includes a receiving module 701, an IP address searching module 702, a first determining module 703, and a first service access request terminating module 704, or includes a receiving module 701, a server domain name searching module 705, a second determining module 706, and a second service access request terminating module 707, where:
the receiving module 701 is configured to receive a service access request packet, where the packet includes a domain name of a server to which access is requested and an IP address of the server to which access is requested;
the IP address searching module 702 is configured to search for an IP address corresponding to the domain name of the server to which access is requested;
the first determining module 703 is configured to determine whether the IP address of the server to which access is requested is consistent with the found IP address;
the first service access request terminating module 704 is configured to terminate the service access request if the IP address of the server to which access is requested is inconsistent with the found IP address;
the server domain name searching module 705 is configured to search for a server domain name corresponding to the IP address of the server to which access is requested;
the second determining module 706 is configured to determine whether the domain name of the server to which access is requested is consistent with the found server domain name; and
the second service access request terminating module 707 is configured to terminate the service access request if the domain name of the server to which access is requested is inconsistent with the found server domain name.

After a receiving module 701 receives a service access request packet that includes a domain name of a server to which access is requested and an IP address of the server to which access is requested, an IP address searching module 702 searches for an IP address corresponding to the domain name of the server to which access is requested. A first determining module 703 determines whether the IP address of the server to which access is requested is consistent with the found IP address. If the IP addresses are inconsistent, a first service access request terminating module 704 terminates the service access request. Specific content is corresponding to method embodiments described in Embodiment 1 and Embodiment 2. The details are not described herein again.

### Embodiment 7

FIG. 8 is a structural block diagram of an apparatus for preventing unauthorized service access according to Embodiment 7 of the present invention. The details are described as follows:
The apparatus for preventing unauthorized service access described in this embodiment of the present invention includes a receiving module 801, an IP address searching module 802, a first determining module 803, a first service access request terminating module 804, a domain name resolution request sending module 805, an IP address receiving module 806, a service type searching module 807, and a receiving and searching module 808.

The receiving module 801 is configured to receive a service access request packet, where the packet includes a domain name of a server to which access is requested and an IP address of the server to which access is requested.

The IP address searching module 802 is configured to search, according to a preset table of correspondences between domain names of servers and IP addresses, for an IP address corresponding to the domain name of the server to which access is requested.

The first determining module 803 is configured to determine whether the IP address of the server to which access is requested is consistent with the found IP address;
The first service access request terminating module 804 is configured to terminate the service access request if the IP address of the server to which access is requested is inconsistent with the found IP address;
The domain name resolution request sending module 805 is configured to send a domain name resolution request according to the domain name of the server to which access is requested in the packet.

The IP address receiving module 806 is configured to receive and store an IP address that is returned after domain name resolution and corresponding to the domain name of the server to which access is requested in the packet.

The service type searching module 807 is configured to search, according to a preset table of correspondences between service types and IP addresses, for a service type corresponding to the IP address of the server to which access is requested.

The receiving and storing module 808 is configured to receive and store the table of correspondences between service types and IP addresses.

When a receiving module 801 receives a service access request packet, an IP address searching module 802 searches, according to a domain name of a server in the packet and a preset table of correspondences between domain names of servers and IP addresses, for an IP address corresponding to the domain name of the server to which access is requested. A first determining module 803 determines whether the IP address of the server to which access is requested is consistent with the found IP address. If the IP addresses are inconsistent, a first service access request terminating module 805 terminates the service access request. The preset table of correspondences between domain names of servers and IP addresses may be obtained by a domain name resolution request sending module 805 and an IP address receiving module 806. The domain name resolution request sending module 805 sends a domain name resolution request according to the domain name of the server to which access is requested in the packet, and the IP address receiving module 806 receives and stores an IP address that is returned after domain name resolution and is corresponding to the domain name of the server to which access is requested in the packet. In addition, a receiving and storing module 808 may receive and store a table of correspondences between service types and IP addresses, and a service type searching module 807 searches, according to the preset table of correspondences between service types and IP addresses, for a service type corresponding to the IP address of the server to which access is requested, thereby avoiding using a deep packet inspection technology to search for feature information to obtain a service type. This embodiment of the present invention is corresponding to the method embodiment described in Embodiment 3. The details are not described herein again.

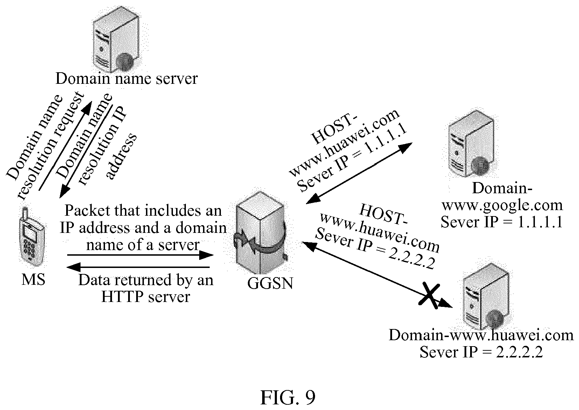

FIG. 9 is a schematic structural diagram of a system according to embodiments of the present invention. As shown in FIG. 9, a mobile station MS sends a request for visiting a link www.google.com to a domain name server; the domain name server performs resolution according to the domain name in the access requested link and returns the IP address 1.1.1.1 corresponding to the domain name; the mobile station constructs a packet according to the domain name in the access request and the returned IP address and sends the packet to a gateway device GGSN; and the GGSN find, according to PCRF policy and charging rules function configurations, whether the domain name in the request is chargeable. The domain name www.google.com configured by the policy server is chargeable, but some users illegally change the domain name in the packet to a free domain name, such as www.huawei.com. To prevent this service from being regarded as a free service during charging, the system resolves the domain name in the packet again to obtain an IP address corresponding to the domain name in the packet, compares the two IP addresses, and if the two are inconsistent, discards the access request, thereby effectively preventing undercharge due to tampering of a received packet by a user.

It should be noted that the modules included in the foregoing apparatus and system embodiments are divided according to functional logic, but are not limited to the division, so long as the corresponding functions are implemented. In addition, a specific name of each functional unit is merely used to distinguish one functional unit from another and not intended to limit the protection scope of the present invention.

Moreover, a person of ordinary skill in the art may understand that all or a part of the steps of the methods in the embodiments may be implemented by a program instructing relevant hardware. The program may be stored in a computer readable storage medium, such as a ROM/RAM, a magnetic disk, or an optical disc.

The foregoing descriptions are merely exemplary embodiments of the present invention, but are not intended to limit the present invention. Any modification, equivalent replacement, and improvement made without departing from the principle of the present invention should fall within the protection scope of the present invention.

## Claims

1. A method for preventing unauthorized service access, wherein the method comprises:
receiving (201), by a gateway device, a service access request packet sent by a mobile station, wherein the packet comprises a domain name of a server to which access is requested and an IP address of the server to which access is requested;
searching, according to a preset table of correspondences between service types and IP addresses, for a service type corresponding to the IP address of the server to which access is requested;
searching (202), by the gateway device, according to a preset table of correspondences between domain names of servers and IP addresses on the gateway device, for an IP address corresponding to the domain name of the server to which access is requested;
determining (203), by the gateway device, whether the IP address of the server to which access is requested is consistent with the found IP address; and
terminating (204), by the gateway device, the service access request if the IP address of the server to which access is requested is inconsistent with the found IP address.

2. The method according to claim 1, before the step of searching for a service type corresponding to the IP address of the server to which access is requested, further comprising:
receiving and storing a table of correspondences between service types and IP addresses.

3. The method according to claim 1 or 2, wherein the step of terminating the service access request specifically comprises:
discarding the service access request packet.

4. An apparatus for preventing unauthorized service access, wherein the apparatus is a gateway device, and comprises a receiving module (701), a service type searching module, an IP address searching module (702), a first determining module (703), and a first service access request terminating module (704), wherein:
the receiving module (701) is configured to receive a service access request packet, wherein the packet comprises a domain name of a server to which access is requested and an IP address of the server to which access is requested;
the service type searching module is configured to search, according to a preset table of correspondences between service types and IP addresses, for a service type corresponding to the IP address of the server to which access is requested;
the IP address searching module (702) is configured to search according to a preset table of correspondences between domain names of servers and IP addresses on the gateway device, for an IP address corresponding to the domain name of the server to which access is requested;
the first determining module (703) is configured to determine whether the IP address of the server to which access is requested is consistent with the found IP address;
the first service access request terminating module (704) is configured to: if the IP address of the server to which access is requested is inconsistent with the found IP address, terminate the service access request.

5. The apparatus according to claim 4, wherein the apparatus further comprises a receiving and storing module, configured to receive and store a table of correspondences between service types and IP addresses.

6. The apparatus according to claim 4 or 5, wherein the first service request terminating module or the second service request terminating module is specifically configured to discard the service access request packet.

## Patentansprüche

1. Verfahren zum Verhindern von unberechtigtem Dienstzugriff, wobei das Verfahren umfasst:
Empfangen (201), durch eine Gatewayvorrichtung, eines von einer mobilen Station gesendeten Dienstzugriffsanforderungspakets, wobei das Paket einen Domänennamen eines Servers, auf den der Zugriff angefordert wird, und eine IP-Adresse des Servers umfasst, auf den der Zugriff angefordert wird;
Suchen, gemäß einer vorbestimmten Tabelle mit Entsprechungen zwischen Diensttypen und IP-Adressen, nach einem Diensttyp, der der IP-Adresse des Servers entspricht, auf den der Zugriff angefordert wird;
Suchen (202), durch die Gatewayvorrichtung, gemäß einer vorbestimmten Tabelle mit Entsprechungen zwischen Domänennamen von Servern und IP-Adressen an der Gatewayvorrichtung, nach einer IP-Adresse, die dem Domänennamen des Servers entspricht, auf den der Zugriff angefordert wird;
Ermitteln (203), durch die Gatewayvorrichtung, ob die IP-Adresse des Servers, auf den der Zugriff angefordert wird, mit der gefundenen IP-Adresse übereinstimmt; und
Beenden (204), durch die Gatewayvorrichtung, der Dienstzugriffsanforderung, falls die IP-Adresse des Servers, auf den der Zugriff angefordert wird, nicht mit der gefundenen IP-Adresse übereinstimmt.

2. Verfahren nach Anspruch 1, das ferner vor dem Schritt des Suchens nach einem Diensttyp, der der IP-Adresse des Servers entspricht, auf den der Zugriff angefordert wird, umfasst:
Empfangen und Speichern einer Tabelle von Entsprechungen zwischen Diensttypen und IP-Adressen.

3. Verfahren nach Anspruch 1 oder 2, wobei der Schritt des Beendens der Dienstzugriffsanforderung insbesondere umfasst:
Verwerfen des Dienstzugriffsanforderungspakets.

4. Einrichtung zum Verhindern von unberechtigtem Dienstzugriff, wobei die Einrichtung eine Gatewayvorrichtung ist und ein Empfangsmodul (701), ein Diensttypsuchmodul, ein IP-Adressen-Suchmodul (702), ein erstes Ermittlungsmodul (703) und ein erstes Dienstzugriffsanforderungsbeendungsmodul (704) umfasst, wobei:
das Empfangsmodul (701) ausgelegt ist, ein Dienstzugriffsanforderungspaket zu empfangen, wobei das Paket einen Domänennamen eines Servers, auf den der Zugriff angefordert wird, und eine IP-Adresse des Servers umfasst, auf den der Zugriff angefordert wird;
das Diensttypsuchmodul ausgelegt ist, gemäß einer vorbestimmten Tabelle mit Entsprechungen zwischen Diensttypen und IP-Adressen, nach einem Diensttyp zu suchen, der der IP-Adresse des Servers entspricht, auf den der Zugriff angefordert wird;
das IP-Adressen-Suchmodul (702) ausgelegt ist, gemäß einer vorbestimmten Tabelle mit Entsprechungen zwischen Domänennamen von Servern und IP-Adressen an der Gatewayvorrichtung nach einer IP-Adresse zu suchen, die dem Domänennamen des Servers entspricht, auf den der Zugriff angefordert wird;
das erste Ermittlungsmodul (703) ausgelegt ist, zu ermitteln, ob die IP-Adresse des Servers, auf den der Zugriff angefordert wird, mit der gefundenen IP-Adresse übereinstimmt;
das erste Dienstzugriffsanforderungsbeendungsmodul (704) ausgelegt ist: falls die IP-Adresse des Servers, auf den der Zugriff angefordert wird, nicht mit der gefundenen IP-Adresse übereinstimmt, die Dienstzugriffsanforderung zu beenden.

5. Einrichtung nach Anspruch 4, wobei die Vorrichtung ferner ein Empfangs- und Speichermodul umfasst, das ausgelegt ist, eine Tabelle von Entsprechungen zwischen Diensttypen und IP-Adressen zu empfangen und zu speichern.

6. Einrichtung nach Anspruch 4 oder 5, wobei das erste Dienstanforderungsbeendungsmodul oder das zweite Dienstanforderungsbeendungsmodul insbesondere konfiguriert ist, das Dienstzugriffsanforderungspaket zu verwerfen.

## Revendications

1. Procédé de prévention d'accès non autorisé à un service, le procédé comportant les étapes consistant à :
faire recevoir (201), par un dispositif de passerelle, un paquet de demande d'accès au service émis par une station mobile, le paquet comportant un nom de domaine d'un serveur auquel l'accès est demandé et une adresse IP du serveur auquel l'accès est demandé ;
rechercher, selon une table prédéfinie de correspondances entre types de services et adresses IP, un type de service correspondant à l'adresse IP du serveur auquel l'accès est demandé ;
faire rechercher (202), par le dispositif de passerelle, selon une table prédéfinie de correspondances entre noms de domaines de serveurs et adresses IP sur le dispositif de passerelle, une adresse IP correspondant au nom de domaine du serveur auquel l'accès est demandé ;
faire déterminer (203), par le dispositif de passerelle, si l'adresse IP du serveur auquel l'accès est demandé concorde avec l'adresse IP trouvée ; et
faire arrêter (204), par le dispositif de passerelle, la demande d'accès au service si l'adresse IP du serveur auquel l'accès est demandé ne concorde pas avec l'adresse IP trouvée.

2. Procédé selon la revendication 1, comportant en outre, avant l'étape de recherche d'un type de service correspondant à l'adresse IP du serveur auquel l'accès est demandé :
la réception et le stockage d'une table de correspondances entre types de services et adresses IP.

3. Procédé selon la revendication 1 ou 2, l'étape d'arrêt de la demande d'accès au service comportant spécifiquement :
l'élimination du paquet de demande d'accès au service.

4. Appareil de prévention d'accès non autorisé à un service, l'appareil étant un dispositif de passerelle et comportant un module (701) de réception, un module de recherche de type de service, un module (702) de recherche d'adresse IP, un premier module (703) de détermination et un premier module (704) d'arrêt de demande d'accès au service, le module (701) de réception étant configuré pour recevoir un paquet de demande d'accès au service, le paquet comportant un nom de domaine d'un serveur auquel l'accès est demandé et une adresse IP du serveur auquel l'accès est demandé ;
le module de recherche de type de service étant configuré pour rechercher, selon une table prédéfinie de correspondances entre types de services et adresses IP, un type de service correspondant à l'adresse IP du serveur auquel l'accès est demandé ;
le module (702) de recherche d'adresse IP étant configuré pour rechercher, selon une table prédéfinie de correspondances entre noms de domaines de serveurs et adresses IP sur le dispositif de passerelle, une adresse IP correspondant au nom de domaine du serveur auquel l'accès est demandé ;
le premier module (703) de détermination étant configuré pour déterminer si l'adresse IP du serveur auquel l'accès est demandé concorde avec l'adresse IP trouvée ;
le premier module (704) d'arrêt de demande d'accès au service étant configuré :
si l'adresse IP du serveur auquel l'accès est demandé ne concorde pas avec l'adresse IP trouvée, pour arrêter la demande d'accès au service.

5. Appareil selon la revendication 4, l'appareil comportant en outre un module de réception et de stockage, configuré pour recevoir et stocker une table de correspondances entre types de services et adresses IP.

6. Appareil selon la revendication 4 ou 5, le premier module d'arrêt de demande de service ou le deuxième module d'arrêt de demande de service étant spécifiquement configuré pour éliminer le paquet de demande d'accès au service.
